Europäisches Patentamt

European Patent Office

Office européen des brevets

(11) Publication number: **0 056 566**
**B1**

(12) **EUROPEAN PATENT SPECIFICATION**

(45) Date of publication of patent specification: **09.10.85**

(21) Application number: **81850218.9**

(22) Date of filing: **17.11.81**

(51) Int. Cl.⁴: **H 05 F 3/02, B 32 B 5/30**

(54) **Method of manufacturing a plastic mat.**

(30) Priority: **14.01.81 SE 8100196**

(43) Date of publication of application:
**28.07.82 Bulletin 82/30**

(45) Publication of the grant of the patent:
**09.10.85 Bulletin 85/41**

(84) Designated Contracting States:
**AT BE CH DE FR GB IT LI LU NL SE**

(56) References cited:
**FR-A-1 479 767**
**FR-A-2 011 253**
**US-A-3 040 210**
**US-A-3 682 741**

(73) Proprietor: **HOLMSUND GOLV AKTIEBOLAG**
**Box 5**
**S-913 00 Holmsund (SE)**

(72) Inventor: **Martell, Karl Rune**
**Svenskbyvägen 14**
**S-913 00 Holmsund (SE)**

(74) Representative: **Illum, Leif-Otto**
**Svenska Cellulosa Aktiebolaget SCA**
**Kungsgatan 33**
**S-111 56 Stockholm (SE)**

Courier Press, Leamington Spa, England.

## Description

This invention relates to a method of manufacturing an electroconductive continuous plastic floor mat. This floor mat comprises a continuous base layer of plastic material, which has been made electrically conductive. It further comprises a surface layer of a plastic material containing electroconductive grains which are distributed in the surface layer and are in contact with the base layer.

Floorings of plastic material easily are charged with static electricity. The sparking possibly resulting therefrom is at times of discomfort and can in certain cases, for example at the presence of explosive gases, even cause serious explosion accidents.

In some kind of rooms, for example, operating-rooms in hospitals, it is, therefore, requested that the floor must be electroconductive to some extent. The conductivity of the floor, thus, shall be sufficient to discharge static electricity, but must be restricted so as to prevent electric shocks by spark-over to the floor when contact is made with material, which has become live.

Floorings of plastic can be utilized in such cases when the floorings are made electroconductive by admixing to them electroconductive substances, usually acetylene soot. For obtaining the necessary conductivity the soot content must be so high, 10 to 20 per cent, that the plastic material unavoidably gets black. This is regarded a disadvantage, as in many cases the floorings are desired to be light and/or coloured.

Many solutions for overcoming this disadvantage have been proposed. The electroconductive acetylene soot, as one example, is not admixed to the entire base material, but is concentrated to points, lines or networks in a plastic material, which in general is light and/or coloured. It has not been possible, however, to satisfactorily manufacture such floorings in the form of continuous mats.

From US—A—3 040 210 there is known to laminate a decorative sheet to a conductive backing sheet, so that a two layer structure comprising a base layer and a surface layer is obtained, whereby the decorative sheet contains electroconductive portions which are distributed in it. This known method comprises mixing plastic material with conductive carbon to obtain a conductive plastic material and forming pieces thereof. Mixing said conductive pieces with nonconductive pieces and forming a heavily striated sheet thereof. Cutting this sheet into chips and then forming a decorative sheet thereof, which is laminated to the backing sheet. This method is very complicated and expensive to perform and the surface of the sheet will include rather large spots of the conductive material.

The above problems are solved according to the present invention by a method of manufacturing which is characterized in that the surface layer is applied by spread-coating the base layer with a layer of a non-plastified plastic mass, that the electroconductive grains are supplied so as to be distributed in the spread-coated layer, the size of the grains being at least equal to the thickness of the surface layer and that thereafter the spread-coated layer is plastified by heating and finally is smooth-hobbed by passing it in a heated state through a hobbing unit, so that the grains get into contact with the base layer.

By manufacturing an electroconductive continuous plastic mat according to the inventive method the flooring can be given the desired colour, in that the conductivity has been concentrated to small defined points. Preferred embodiments of the invention become apparent from the appended claims.

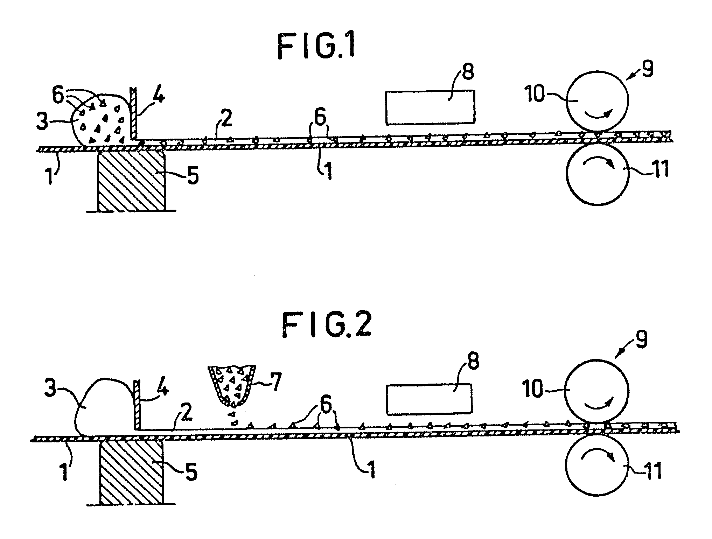

The invention is described in greater detail in the following with reference to the attached Figs. 1 and 2 showing by way of example two embodiments of the method according to the invention.

An electroconductive base layer 1 of plastic material is manufactured conventionally, for example, by rolling, calendering, extrusion etc. of a plastic material, for example PVC (polyvinyl chloride), containing a substantial content of an electroconductive substance, for example 10 to 20 per cent acetylene soot. The thickness of the base layer can be about 1 to 3 mm. The conductivity is adjusted by the acetylene soot content.

The base layer, for example, may have the following approximate composition:

| | |
|---|---|
| PVC (polyvinyl chloride) | 100 parts |
| Dioctylphthalate | 55 parts |
| Heat stabilizer (basic lead carbonate) | 5 parts |
| Calcium carbonate | 100 parts |
| Acetylene soot | 40 parts |

On the base layer a surface layer 2 is applied by spread-coating with a plastic mass 3 of viscous consistency, for example a PVC paste. The plastic mass then is in a non-plastified state. The spread-coating is carried out by means of a doctor blade when the base layer is passing over a support surface 5. The thickness of the surface layer varies according to the application field, but can be about 0.4 to 1 mm.

The plastic mass, for example, may have the following approximate composition:

| | |
|---|---|
| PVC (polyvinyl chloride) | 100 parts |
| Dioctyl phthalate | 20 parts |
| Butyl benzyl phthalate | 20 parts |
| Heat stabilizer | 2 parts |
| Pigment | 2 parts |

In order to obtain electrocondictivity across through the surface layer, electroconductive grains 6 are applied to the surface layer. The grain size is at least equal to the thickness of the surface layer.

According to Fig. 1, the grains 6 are admixed to the plastic mass 3 prior to the spread-coating operation. According to Fig. 2, the spread-coating is carried out at first. Thereafter the grain 6 are applied to the surface layer from a separate supply means 7.

The grains 6 may consist of electroconductive material, such as metal or plastic having been made electroconductive. Another alternative is that the grains 6 consist of electrically insulative material, which has been coated with electroconductive material. For example mineral with a surface layer of electroconductive thermoset.

In the mat formed, i.e. the base layer 1 coated with the surface layer 2 and grains 6 plastification of the surface layer 2 is brought about by heating by means of a heating device 8, for example in the form of a furnace or a heat radiation device. The heating temperature may be 150 to 200°C.

The mat thereafter is smooth-hobbed by passing it in heated state through a hobbing unit 9 with a hobbing roll 10 and a counter-pressure roll 11. The smooth-hobbing operation is carried out substantially without reduction of the mat thickness. When the grains 6 have been applied to the surface layer 2 subsequent to the spread-coating (Fig. 2), the grains are pressed down through the surface layer 2 into contact with the base layer 1. When the grains 6 are admixed to the plastic mass 3 already prior to the coating (Fig. 1), the smooth-hobbing yet ensures the function of the grains as electric conductors across through the surface layer 2 by depressing possible upward projecting tops.

## Claims

1. A method of manufacturing an electroconductive continuous plastic floor mat comprising a continuous base layer of plastic material, which has been made electrically conductive, and a surface layer of a plastic material containing electroconductive grains which are distributed in the surface layer and are in contact with the base layer, characterized in that said surface layer is applied by spread-coating the base layer (1) with a layer (2) of a non-plastified plastic mass (3), that said electroconductive grains (6) are supplied so as to be distributed in the spreadcoated layer (2), the size of the grains being at least equal to the thickness of the surface layer, and that thereafter the spread-coated layer (2) is plastified by heating and finally is smooth-hobbed by passing it in a heated state through a hobbing unit (9), so that the grains get into contact with the base layer (1).

2. A method as defined in claim 1, characterized in that the grains (6) are supplied to and distributed in the plastic mass (3) prior to the spread-coating.

3. A method as defined in claim 1, characterized in that the grains (6) are applied to the spreadcoated layer (2) subsequent to the spread-coating.

4. A method as defined in any one of the claims 1—3, characterized in that the grains (6) consist of an electroconductive material.

5. A method as defined in any one of claims 1—3, characterized in that the grains (6) consist of an electrically insulating material with a coat of electroconductive material.

## Patentansprüche

1. Verfahren zum Herstellen einer elektrisch leitenden fortlaufenden Kunstoffbodenmatte, die eine fortlaufende Grundschicht aus einem Kunststoffmaterial, des elektrisch leitend gemacht wurde, und eine Oberflächenschicht aus einem Kunststoffmaterial umfaßt, die elektrisch leitende Körner enthält, die in der Oberflächenschicht verteilt sind und mit der Grundschicht in Kontakt stehen, dadurch gekennzeichnet, daß die Oberflächenschicht durch Auftragen eine Schicht (2) aus einer nicht plastifizierten Kunststoffmasse (3) auf der Grundschicht (1) aufgebracht wird, daß die elektrisch leitenden Körner (6) so zugegeben werden, daß sie in der aufgebrachten Schicht (2) verteilt werden, wobei die Größe der Körner wenigstens gleich der Stärke der Oberflächenschicht ist, und daß danach die aufgebrachte Schicht (2) durch Erwärmen plastifiziert und schließlich dadurch geglättet wird, daß sie im erwärmten Zustand durch eine Wälzeinheit (9) geleitet wird, so daß die Körner mit der Grundschicht (1) in Kontakt kommen.

2. Verfahren nach Anspruch 1, dadurch gekennzeichnet, daß die Körner (6) vor dem Auftragen der Kunststoffmass (3) zugegeben und in der Kunststoffmasse(3) verteilt werden.

3. Verfahren nach Anspruch 1, dadurch gekennzeichnet, daß die Körner (6) anschließend an das Auftragen auf die aufgetragene Schicht (2) aufgebracht werden.

4. Verfahren nach einem der Ansprüche 1 bis 3, dadurch gekennzeichnet, daß die Körner (6) aus einem elektrisch leitenden Material bestehen.

5. Verfahren nach einem der Ansprüche 1 bis 3, dadurch gekennzeichnet, daß die Körner (6) aus einem elektrisch isolierenden Material mit einm Überzug aus einem elektrisch leitenden Material bestehen.

## Revendications

1. Procédé pour la fabrication en continu d'un tapis en matière plastique électriquement conductrice, comprenant une couche de base continue de matière plastique, rendue électriquement conductrice, et une couche de surface d'une matière plastique contenant des grains électroconducteurs qui sont distribués dans la couche de surface et au contact de la couche de base, caractérisé en ce que la couche de surface est appliquée par pulvérisation de la couche de base (1) à l'aide d'une couche (2) d'une masse plastique non plastifiée (3), en ce que lesdits grains électroconducteurs (6) sont délivrés de manière à être distribués dans la couche (2) déposée par pulvérisations, la dimension des grains étant au moins égale à l'épaisseur de la couche de surface, et en ce qu'ensuite, la couche (2) déposée par pulvérisation est plastifiée par chauffage, et finalement lissée sous pression en la faisant passer, à l'état chaud, dans une presse à rouleaux (9) afin d'amener les grains au contact de la couche de base (1).

2. Procédé selon la revendication 1, caractérisé en ce que les grains (6) sont amenés à, et distribués dans la masse plastique (3) avant le processus de revêtement par pulvérisation.

3. Procédé selon la revendication 1, caractérisé en ce que les grains (6) sont appliqués sur la couche superficielle (2) après le processus de revêtement par pulvérisation.

4. Procédé selon l'une quelconque des revendications 1 à 3, caractérisé en ce que les grains (6) sont constitués par un matériau électro-conducteur.

5. Procédé selon l'une quelconque des revendications 1 à 3, caractérisé en ce que les grains (6) sont constitués par un matériau électriquement isolant, revêtu d'une couche d'un matériau électro-conducteur.

# FIG.1

# FIG.2

1